# EUROPÄISCHE PATENTSCHRIFT

(11) **EP 1 294 158 B1**
(45) Veröffentlichungstag und Bekanntmachung des Hinweises auf die Patenterteilung: **19.07.2006**
(21) Anmeldenummer: 02018568.2
(22) Anmeldetag: 19.08.2002
(51) Int. Cl.: H04L 12/18, H04L 29/12, H04N 7/18

(54) **Verfahren zur Kommunikation in einem Netzwerk sowie Softwareprodukt**
Method for communication in a network and corresponding software product
Procédé de communication dans un réseau et produit logiciel correspondant

(30) Priorität: 14.09.2001 DE 10145329
(43) Veröffentlichungstag der Anmeldung: 19.03.2003
(73) Patentinhaber: Videte IT AG, 24118 Kiel (DE)
(72) Erfinder: Mädge, Ramon, 24145 Kiel (DE)
(74) Vertreter: Seemann, Ralph

(56) Entgegenhaltungen:
- US-A- 6 061 334

## Beschreibung

Die Erfindung betrifft ein Verfahren zur Kommunikation in einem Netzwerk mit wenigstens einer Netzwerkgruppe, umfassend wenigstens einen Client, insbesondere Computer oder Bilddarstellungseinrichtung, und wenigstens einen Server, insbesondere Bildaufzeichnungsgerät, sowie ein Softwareprodukt, eine Bildaufzeichnungseinrichtung und eine Bilddarstellungseinrichtung.

Zur Überwachung von Räumen und öffentlichen Plätzen werden sogenannte Videoüberwachungssysteme eingesetzt. Diese Überwachungssysteme bestehen in der Regel aus einem oder mehreren Kameras und einem daran angeschlossenen Videorekorder zur Bildaufzeichnung. Infolge der zunehmenden Digitalisierung von Geräten werden als Rekorder digitale Videorekorder zunehmend eingesetzt. Diese Videorekorder basieren auf Computern, insbesondere PCs und können Bilder und Daten über entsprechende digitale Netzwerke z.B. ISDN oder Ethernet empfangen und übertragen. Darüber hinaus ermöglichen verfügbare Bildkompressionsverfahren hohe Bildraten für die Archivierung bei guter Ausnutzung der Speicherkapazität und hervorragende Bildqualität.

Darüber hinaus besteht die Möglichkeit, mehrere Geräte in einem Netzwerk miteinander zu verbinden. Hierbei kann beispielsweise von einem PC auf die Bilddaten von mehreren digitalen Videorekordern zugegriffen werden. Diese Bilddaten aus unterschiedlichen Quellen können schließlich am Computer gleichzeitig dargestellt werden. Hierfür muss der Computer Zugriff zu den angeschlossenen Videorekordern haben.

Es ist dazu erforderlich, dass eine Verbindung zwischen dem Computer (Client) und mindestens einem digitalen Videorekorder über ein lokales Netzwerk (Ethernet) hergestellt wird. In der Regel wird die Kommunikation zwischen Client und Server auf der Basis des weit verbreiteten TCP-Protokolls betrieben. Dabei werden Client und Server (Videorekorder) durch eine eindeutige Adresse (IP-Adresse) im Netzwerk identifiziert. Nur mit Hilfe dieser Adressen ist es möglich, eine TCP-Verbindung zwischen Client und Server herzustellen. Diese Verwendung bleibt bestehen, bis einer der beiden Teilnehmer diese beendet oder sie aufgrund technischer Probleme und Fehler (Leitungsbruch, etc.) zwangsweise unterbrochen wird.

Bei einem derartigen Aufbau und einer solchen Kommunikation zwischen Client und Server ist es nachteilig, dass einem Benutzer des Client im Vorfeld bekannt sein muss, welche Server (Videorekorder) sich im Netzwerk befinden und durch welche Adressen sie zu identifizieren sind um eine Verbindung mit ihnen herstellen zu können.

Ferner sind in US-A-6 061 334 ein Verfahren und eine Vorrichtung zum Zuordnen von virtuellen Netzwerken beschrieben. Hierbei werden an das Netzwerk angeschlossene Endstationen erfasst und in virtuelle LANs (VLANs) eingeteilt. Die Endstationen können innerhalb eines VLANs nur mit anderen Endstationen in demselben VLAN ohne Umweg über einen Router kommunizieren, allerdings nicht mit Endstationen in anderen VLANs. Die Erfassung von Endstationen im Netzwerk durch die Vorrichtung erfolgt aktiv, wobei so genannte "ICMP (Internet Control Message Protocol) echo request packets" an einzelne Endstationen ausgesendet werden und daraufhin von den entsprechenden Endstationen ausgesandte "ICMP echo reply packets" empfangen werden, oder passiv durch den Empfang und die Analyse von "ARP (Address Resolution Protocol) packets", die im Netzwerk-Datenstrom vorhanden sind, wenn eine Endstation Verbindungsprobleme hat, zum Beispiel bei einer Neuanmeldung. Wenn eine neue Endstation an das Netzwerk angekoppelt wird, erkennt die Vorrichtung die neue Endstation und ordnet sie einem vorhandenen VLAN zu.

Ausgehend von diesem Stand der Technik ist es Aufgabe der vorliegenden Erfindung, die Inbetriebnahme bzw. den Betrieb eines Netzwerkes mit Videorekordern und Computern zu verbessern, wobei die Handhabung und Anpassung des Netzwerkes an die vorhandenen Geräte bzw. Einrichtungen erleichtert werden soll.

Gelöst wird diese Aufgabe durch die kennzeichnenden Merkmale des Anspruchs 1. Vorteilhafte Ausgestaltungen der Erfindung sind in den Unteransprüchen beschrieben.

Die erfindungsgemäße Lösung sieht vor, dass nach Beitritt wenigstens eines Teilnehmers (Client oder Server) zu einer Netzwerkgruppe entweder ein Client-Datenpaket vom als Client ausgebildeten Teilnehmer an die Netzwerkgruppe übermittelt wird, das Client-Datenpaket an wenigstens einen Server der Netzwerkgruppe weitergeleitet wird und wenigstens ein Server-Datenpaket vom Server an die Netzwerkgruppe übermittelt wird oder ein Server-Datenpaket vom als Server ausgebildeten Teilnehmer an die Netzwerkgruppe übermittelt wird, wobei mittels der Server-Datenpakete ein Verzeichnis der zur Netzwerkgruppe zugeordneten Server in wenigstens einem Client erzeugt wird.

Der Vorteil besteht darin, dass ein vorheriger Informationsaustausch zwischen einem Benutzer und einem Netzwerkadministrator nicht mehr nötig ist. Zudem braucht ein Client-Benutzer, nicht mehr zu wissen, welche Server sich augenblicklich im Netzwerk befinden und durch welche Adressen sie sich identifizieren lassen.

Damit jeder Netzwerkbenutzer an einem Client Kenntnis über die aktuell vorhandene Netzwerkstruktur und verfügbaren Server erhält, wird mittels der Server-Datenpakete ein Verzeichnis der zur Netzwerkgruppe zugeordneten Server in wenigstens einem Client erzeugt. In diesem Verzeichnis werden die momentan im Netzwerk verfügbaren Server, d.h. Videorekorder, aufgelistet, auf deren (Bild)-Daten vom Client zugegriffen werden kann. Am Client-Gerät (z.B. Computer) kann dann dem Benutzer angezeigt werden, welcher Videorekorder (Server) aktuell vorhanden ist.

Außerdem ist es vorteilhaft, wenn das Client-Datenpaket bzw. das Server-Datenpaket zum An- und Abmelden eines Netzwerk-Teilnehmers automatisch übermittelt wird. Aufgrund dieser selbsttätigen Übertragung von Datagrammen entfällt eine manuelle Eingabe der im Netzwerk der Netzwerkgruppe vorhandenen Geräte. Gleichzeitig wird erreicht, dass die Struktur der Netzwerkgruppe entsprechend der Netzwerkdynamik abgebildet wird und stets präsent ist.

Eine weitere Verbesserung der Netzwerkarchitektur wird erreicht, wenn das Server-Datenpaket in vorbestimmten. Zeitabständen übermittelt wird. Die Server im Netzwerk senden in vorgebbaren Zeiten ein Datenpaket an die Netzwerkgruppe, um eine Art "Anwesenheitszeichen" zu senden. Es wird daher zu jeder Zeit genaue Kenntnis im Netz bestehen, welche Server, d.h. Videorekorder, (noch) aktuell in einer Sitzung angeschlossen sind. Ein Server, der nach einem Datenpaket kein weiteres Datenpaket mehr an die Netzwerkgruppe übermittelt gilt als abgemeldet, so dass auf die Ressourcen (Bilddaten) dieses Servers nicht mehr vom Client zurückgegriffen werden kann. Es wird daher jeder Ausfall eines Servers stets sofort registriert. Dies gilt insbesondere für Server, die kein Abmelde-Datenpaket abgeschickt haben. Dies ist z.B. dann der Fall, wenn bei diesem Server ein Systemabsturz vorliegt.

Aufgrund der permanenten und wiederholten Übermittlung von Server-Datenpaketen in vorbestimmten Zeitabständen ist es besonders vorteilhaft, wenn das Verzeichnis in vorbestimmten Zeitabständen ebenfalls aktualisiert wird. Der Client-Benutzer ist somit über jede Änderung der Serverstruktur automatisch, zuverlässig und unmittelbar informiert. Die Serverstruktur kann sich ständig ändern, z.B. durch die Änderung von Adressen, Ausfall von Servern und Inbetriebnahme von Servern. Dem Benutzer wird allerdings stets eine Liste mit allen verfügbaren Servern angeboten, aus denen er einen oder mehrere Server zum Verbindungsaufbau auswählen kann. In dem Verzeichnis sind fortlaufend nur die Server aufgeführt, die im Netzwerk angemeldet sind.

Vorzugswürdig ist es ferner, wenn die Aktualisierung des Verzeichnisses und die Übermittlung des Datenpakets des bzw. der Server synchronisiert wird.

In einer vorteilhaften Weiterbildung der Erfindung wird das Verzeichnis über die aktiven und vorhandenen Server im Netzwerk dargestellt, so dass ein Client-Benutzer sich stets aktuell Kenntnis verschaffen kann, welche Server-Ressourcen vorhanden sind.

Ebenso ist es vorzugswürdig, wenn das Netzwerk mit Clients und Servern mittels eines Protokolls, insbesondere TCP/IP-Protokolls, betrieben wird. Das Protokoll nach TCP/IP-Standard hat sich weltweit in Netzwerken, insbesondere LAN-Netzwerken, bewährt und durchgesetzt.

Eine vorzugswürdige Ausgestaltung der Erfindung sieht vor, dass die Daten von wenigstens einem Server an wenigstens einen Client übermittelt werden und anhand der übermittelten Daten wenigstens ein Bild am Client erzeugt bzw. dargestellt wird. Hierbei ist der Server als Bildaufzeichnungs- und Bildspeichergerät, insbesondere digitaler Videorekorder, ausgebildet.

Die Aufgabe der Erfindung wird ferner gelöst durch ein Softwarepaket mit Programmcode-Mitteln, um alle Schritte des voranstehend beschriebenen Verfahrens durchzuführen.

Darüber hinaus ist es von Vorteil, wenn das Softwarepaket auf einem Datenträger oder Medium gespeichert werden kann bzw. speicherbar ist.

Weiterhin ist es vorzugswürdig, wenn das Softwarepaket wenigstens auf einem digitalen Bildaufzeichnungsgerät, insbesondere Videorekorder, bzw. auf wenigstens einem Computer oder einer anderen Bilddarstellungseinrichtung ausführbar ist. Eine derartige Bilddarstellungseinrichtung kann beispielsweise auch ein Mobilfunkgerät oder ein Multimediagerät sein, die netzwerkfähig sind und insbesondere auch Bilder darstellen können.

Ferner wird die Aufgabe gelöst durch eine Bildaufzeichnungseinrichtung, insbesondere einen digitalen Videorekorder, und eine Bilddarstellungseinrichtung, insbesondere Computer oder Mobilfunkgerät oder Multimediagerät. Diese genannten Einrichtungen sind vorzugsweise netzwerkfähig und mit einem Softwareprodukt der vorgenannten Art ausgestattet.

Die Erfindung wird nachstehend anhand eines Ausführungsbeispieles exemplarisch und ohne Beschränkung des allgemeinen Erfindungsgedankens beschrieben.

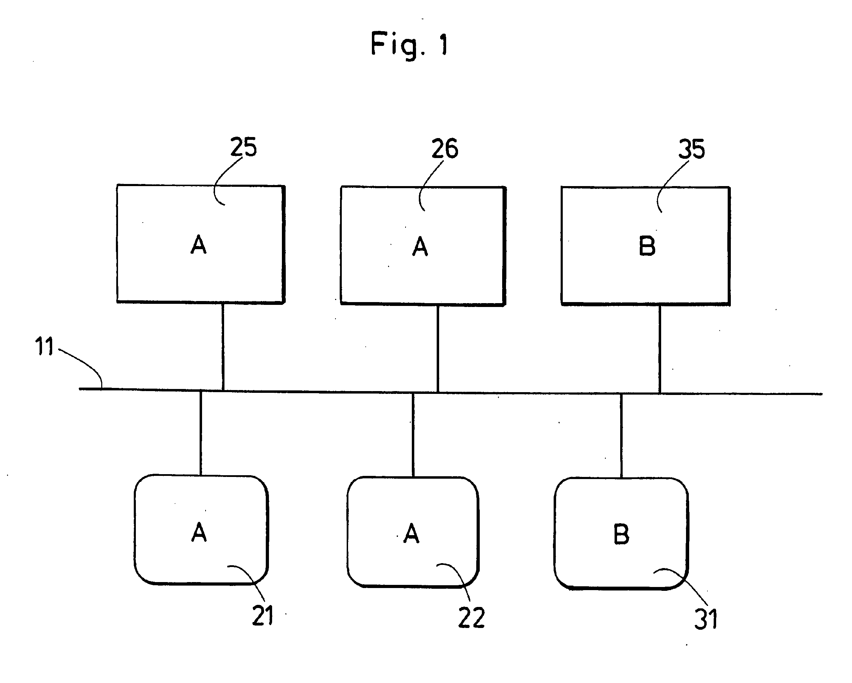

Figur 1 zeigt ein Netzwerk, das vorliegend als Local Area Network (LAN) betrieben wird. An die Verbindungsleitung 11 sind mehrere Server 25, 26 und 35 angeschlossen. Die Server 25, 26 sind Mitglieder einer Netzwerkgruppe A. Der Server 35 ist der Netzwerkgruppe B zugeordnet.

Darüber hinaus ist der Netzwerkgruppe A ein erster Client 21 und ein zweiter Client 22 zugeordnet. Die andere Netzwerkgruppe B weist einen Client 31 auf.

Die Server 25, 26, 35 sind als Videoüberwachungsserver ausgebildet. Die beiden Clients der Netzwerkgruppe A können auf die Ressourcen (Daten) der beiden Videoüberwachungsserver 25, 26 der Netzwerkgruppe A zugreifen. Der Client 31 der Gruppe B kann hingegen nur auf den Videoüberwachungsserver 35 zugreifen.

Jede Netzwerkgruppe A, B wird im Netzwerk durch eine eindeutige Netzwerkadresse identifiziert. Daten, die an diese Netzwerkadresse gesendet werden, werden an jedes Mitglied der Netzwerkgruppe jeweils verteilt.

Die Struktur der Netzwerkgruppen A, B ist dynamisch, d.h. Mitglieder (Client und/oder Server) können ein- und austreten.

Startet ein Benutzer ein Programm beispielsweise am als Computer ausgebildeten Client 21 der Gruppe A, so tritt dieser Client 21, auf dem das Programm ausgeführt wird, der Netzwerkgruppe A bei. Das Client-Programm sendet an die Netzwerkgruppe A ein Datenpaket, das eine Aufforderung an alle Server 25, 26 der Netzwerkgruppe beinhaltet, sich durch ihre Netzwerkadresse zu identifizieren. Jeder Server 25, 26 der Netzwerkgruppe A sendet daraufhin ein Datenpaket mit der eigenen Adresse an die Netzwerkgruppe A zurück.

Tritt beispielsweise ein weiterer Server einer Netzwerkgruppe bei, dann sendet dieser Server ein Datenpaket an diese Netzwerkgruppe, um sich anzumelden. Verlässt der Server die Netzwerkgruppe, sendet er ein Datenpaket um sich abzumelden.

Gemäß der Erfindung, werden die Adressen der Server im Programm des Clients in einem Verzeichnis, bzw. einer Liste (IP-Book) verwaltet. Zur Aktualisierung des Verzeichnisses in einem bzw. jedem Client der Netzwerkgruppe sendet jeder Server einer Netzwerkgruppe in bestimmten Zeitintervallen ein erneutes Datenpaket zur Identifizierung. Erhält das Client-Programm bzw. der Client für einen Verzeichniseintrag innerhalb eines definiert vorgebbaren Zeitraums kein Datenpaket eines bislang vorhandenen Servers in der Netzgruppe zur Identifizierung, so wird der Eintrag im Verzeichnis gelöscht. Dies tritt in Fällen auf, bei denen sich der Server nicht ordnungsgemäß abgemeldet hat wie zum Beispiel bei einem technischen Ausfall etc.

Für einen Benutzer ergeben sich durch den Gegenstand der Erfindung die Vorteile, dass der Benutzer eines Client-Programms lediglich aus dem angebotenen Verzeichnis mindestens eine Adresse eines Servers (Videorekorder) bzw. einen Server auswählen muss, um mit diesem im Netzwerk vorhandenen Server eine Verbindung zu starten. Im weiteren Verlauf einer Netzwerksitzung können dann Informationen (z.B. gespeicherte Bilddaten, Livebilder, etc.) ausgetauscht oder übermittelt werden. Der wesentliche Vorteil besteht darin, dass völlig manuelle Adressangaben durch den Benutzer am Client entfallen.

Dem Benutzer werden nur Verzeichnisse am Client mit den verfügbaren Servern einer Netzwerkgruppe angeboten. Die Realisierung zum Betreiben eines Netzwerks mit dem erfindungsgemäßen Verfahren wird mittels eines Multicasting-Verfahrens durchgeführt. Bei diesem Multicasting-Verfahren wird z.B. ein Datenpaket von einem Rechner an eine Empfängergruppe gesendet. Diese Gruppe kann aus einem, mehreren oder auch keinem Rechner bestehen und besitzt eine einzige Netzwerkadresse. Eine Mitgliedschaft in einer Empfängergruppe ist nicht statisch, d.h. neue Teilnehmer können solchen Gruppen beitreten oder sie verlassen, in dem sie beispielsweise so genannte IGMP-Membership-Nachrichten versenden. Das IGMP ist ein Internet-Kontrollprotokoll zur Multicast-Gruppenverwaltung. Die Verwaltung der Empfängergruppen geschieht dabei unabhängig vom Sender, das heißt der Sender benötigt kein "Wissen" über seine Empfängergruppe. Mittels dieses Protokolls können die Netzwerkgruppen verwaltet werden.

Für das erfindungsgemäße Verzeichnis (IP-Book) sind Daten, wie z.B. die einzutragenden Servernamen, und der Austausch weiterer Informationen innerhalb der Netzwerkgruppe notwendig. Diese Informationen werden mittels eines eigens hierfür hergestellten Protokolls gekapselt. Sie beinhalten u.a. Typ des Mitglieds (Server oder Client), Hostname sowie die IP-Adresse.

Der Austausch dieser "Informationspakete" innerhalb einer Netzwerkgruppe erfolgt in regelmäßigen Zeitintervallen, um die Einträge im Verzeichnis dynamisch anzupassen und zu verwalten.

### Bezugszeichenliste

- 11: Netzwerk (LAN)
- 21: Client (Gruppe A)
- 22: Client (Gruppe A)
- 25: Server (Gruppe A)
- 26: Server (Gruppe A)
- 31: Client (Gruppe B)
- 35: Server (Gruppe B)

## Patentansprüche

1. Verfahren zur Kommunikation in einem Netzwerk (10) mit wenigstens einer Netzwerkgruppe (A; B), umfassend wenigstens einen Client (21, 22; 31), insbesondere Computer oder Bilddarstellungseinrichtung, und wenigstens einen Server (25, 26; 35), insbesondere Bildaufzeichnungsgerät, wobei nach Beitritt eines Teilnehmers zu einer Netzwerkgruppe (A; B) entweder
ein Client-Datenpaket vom als Client ausgebildeten Teilnehmer (21, 22; 31) an die Netzwerkgruppe (A; B) übermittelt wird,
das Client-Datenpaket an wenigstens einen Server (25, 26; 35) der Netzwerkgruppe (A; B) weitergeleitet wird und wenigstens ein Server-Datenpaket vom Server (25, 26; 35) an die Netzwerkgruppe (A, B) übermittelt wird
oder
ein Server-Datenpaket vom als Server ausgebildeten Teilnehmer (25, 26; 35) an die Netzwerkgruppe (A, B) übermittelt wird,
**dadurch gekennzeichnet, dass** mittels des Server-Datenpakets wenigstens ein Verzeichnis der zur Netzwerkgruppe zugeordneten Server in wenigstens einem Client erzeugt wird.

2. Verfahren nach Anspruch 1, **dadurch gekennzeichnet, dass** das Client-Datenpaket bzw. Server-Datenpaket automatisch übermittelt wird.

3. Verfahren nach Anspruch 1 oder 2, **dadurch gekennzeichnet, dass** das Server-Datenpaket in vorbestimmten Zeitabständen übermittelt wird.

4. Verfahren nach einem der Ansprüche 1 bis 3, **dadurch gekennzeichnet, dass** das Verzeichnis in vorbestimmten Abständen aktualisiert wird.

5. Verfahren nach einem der Ansprüche 1 bis 4, **dadurch gekennzeichnet, dass** die Aktualisierung des Verzeichnisses und die Übermittlung des Datenpakets synchronisiert werden.

6. Verfahren nach einem oder mehreren der Ansprüche 1 bis 5, **dadurch gekennzeichnet, dass** das Verzeichnis in wenigstens einem Client (21, 22; 31) dargestellt wird.

7. Verfahren nach einem oder mehreren der Ansprüche 1 bis 6, **dadurch gekennzeichnet, dass** das Netzwerk (10) mittels eines Netzwerkprotokolls, insbesondere eines TCP/IP-Protokolls, betrieben wird.

8. Verfahren nach einem oder mehreren der Ansprüche 1 bis 7, **dadurch gekennzeichnet, dass** von wenigstens einem Server Daten an wenigstens einen Client übermittelt werden und mittels der übermittelten Daten wenigstens ein Bild erzeugt und/oder dargestellt wird.

9. Softwareprodukt mit Programm-Code-Mitteln, die zum Durchführen des Verfahrens nach einem oder mehreren der Ansprüche 1 bis 8 geeignet sind.

10. Softwareprodukt nach Anspruch 9, **dadurch gekennzeichnet, dass** das Softwareprodukt auf einem Datenträger oder Medium gespeichert ist.

11. Softwareprodukt nach Anspruch 9 oder 10, **dadurch gekennzeichnet, dass** das Softwareprodukt auf wenigstens einem digitalen Bildaufzeichnungsgerät ausführbar ist.

12. Softwareprodukt nach Anspruch 9 oder 10, **dadurch gekennzeichnet, dass** das Softwareprodukt auf wenigstens einem Computer oder einer Bilddarstellungseinrichtung ausführbar ist.

13. Bildaufzeichnungseinrichtung, insbesondere digitaler Videorekorder, ausgestattet mit einem Softwareprodukt nach Anspruch 9 oder 10.

14. Bilddarstellungseinrichtung, insbesondere Computer oder Handy, ausgestattet mit einem Softwareprodukt nach Anspruch 9 oder 10.

## Claims

1. Method of communicating in a network (10) with at least one network group (A; B), comprising at least one client (21, 22; 31), in particular a computer or an image display device, and at least one server (25, 26; 35), in particular an image recording device, whereby after a subscriber joins a network group (A; B),
either
a client data packet is transmitted from the subscriber (21, 22; 31) configured as the client to the network group (A; B),
the client data packet is forwarded to at least one server (25, 26; 35) of the network group (A; B) and at least one server data packet is transmitted from the server (25, 26; 35) to the network group (A, B),
or a server data packet is transmitted from the subscriber (25, 26; 35) configured as the server to the network group (A, B),
**characterised in that** at least one directory of the server assigned to the network group is created in at least one client by means of the server data packet.

2. Method as claimed in claim 1, **characterised in that** the client data packet or server data packet is transmitted automatically.

3. Method as claimed in claim 1 or 2, **characterised in that** the server data packet is transmitted at pre-defined time intervals.

4. Method as claimed in one of claims 1 to 3, **characterised in that** the directory is updated at pre-defined time intervals.

5. Method as claimed in one of claims 1 to 4, **characterised in that** updating of the directory and transmission of the data packet are synchronised.

6. Method as claimed in one or more of claims 1 to 5, **characterised in that** the directory is presented in at least one client (21, 22; 31).

7. Method as claimed in one or more of claims 1 to 6, **characterised in that** the network (10) is operated by means of a network protocol, in particular a TCP/IP protocol.

8. Method as claimed in one or more of claims 1 to 7, **characterised in that** data is transmitted by at least one server to at least one client and at least one image is generated and/or presented by means of the transmitted data.

9. Software product with programme code means suitable for implementing a method as claimed in one or more of claims 1 to 8.

10. Software product as claimed in claim 9, **characterised in that** the software product is stored on a data carrier or medium.

11. Software product as claimed in claim 9 or 10, **characterised in that** the software product can be run on at least a digital image recording device.

12. Software product as claimed in claim 9 or 10, **characterised in that** the software product can be run on at least a computer or an image display device.

13. Image recording device, in particular a digital video recorder, equipped with a software product as claimed in claim 9 or 10.

14. Image display device, in particular a computer or mobile telephone, equipped with a software product as claimed in claim 9 or 10.

## Revendications

1. Procédé de communication dans un réseau (10) avec au moins un groupe de réseau (A ; B), comprenant au moins un client (21, 22; 31), en particulier un ordinateur ou un dispositif de représentation d'image, et au moins un serveur (25, 26; 35), en particulier un appareil d'enregistrement d'image, par l'intermédiaire duquel, après l'entrée d'un participant dans un groupe de réseau (A-; B),
soit
un paquet de données de client est transmis du participant développé en tant que client (21, 22 ; 31) au groupe de réseau (A ; B),
le paquet de données de client est acheminé vers au moins un serveur (25, 26 ; 35) du groupe de réseau (A ; B) et au moins un paquet de données de serveur est transmis du serveur (25, 26 ; 35) au groupe de réseau (A, B)
soit
un paquet de données de serveur est transmis du participant développé en tant que serveur (25, 26 ; 35) au groupe de réseau (A, B)
**caractérisé en ce qu'**au moins une liste du serveur appartenant au groupe de réseau est établie dans au moins un client à l'aide du paquet de données de serveur.

2. Procédé selon la revendication 1, **caractérisé en ce que** le paquet de données de client, respectivement le paquet de données de serveur, est transmis automatiquement.

3. Procédé selon la revendication 1 ou 2, **caractérisé en ce que** le paquet de données de serveur est transmis selon des intervalles de temps prédéterminés.

4. Procédé selon l'une quelconque des revendications 1 à 3, **caractérisé en ce que** la liste est actualisée selon des intervalles prédéterminés.

5. Procédé selon l'une quelconque des revendications 1 à 4, **caractérisé en ce que** l'actualisation de la liste et la transmission du paquet de données sont synchronisées.

6. Procédé selon l'une quelconque des revendications 1 à 5, **caractérisé en ce que** la liste est représentée dans au moins un client (21, 22 ; 31).

7. Procédé selon l'une quelconque des revendications 1 à 6, **caractérisé en ce que** le réseau (10) est exploité à l'aide d'un protocole de réseau, en particulier un protocole TCP/IP.

8. Procédé selon l'une quelconque des revendications 1 à 7, **caractérisé en ce que** des données sont transmises d'au moins un serveur à au moins un client et au moins une image est produite et/ou représentée à l'aide des données transmises.

9. Produit logiciel pourvu de moyens de code de programme, lesquels sont appropriés à la réalisation du procédé selon l'une quelconque des revendications 1 à 8.

10. Produit logiciel selon la revendication 9, **caractérisé en ce que** le produit logiciel est stocké sur un support de données ou un médium.

11. Produit logiciel selon la revendication 9 ou 10, **caractérisé en ce que** le produit logiciel peut être exécuté sur au moins un appareil d'enregistrement d'image numérique.

12. Produit logiciel selon la revendication 9 ou 10, **caractérisé en ce que** le produit logiciel peut être exécuté sur au moins un ordinateur ou un dispositif de représentation d'image.

13. Dispositif d'enregistrement d'image, en particulier un magnétoscope numérique, muni d'un produit logiciel selon la revendication 9 ou 10.

14. Dispositif d'enregistrement d'image, en particulier un ordinateur ou un portable, muni d'un produit logiciel selon la revendication 9 ou 10.
